# EUROPÄISCHE PATENTANMELDUNG

(11) **EP 4 296 414 A1**
(43) Veröffentlichungstag der Anmeldung: **27.12.2023**
(21) Anmeldenummer: 23177595.8
(22) Anmeldetag: 06.06.2023
(51) Int. Cl.: D01G 27/00, D01G 15/46

(54) **VORRICHTUNG ZUR KALANDRIERUNG EINER WATTEBAHN**

(30) Priorität: 20.06.2022 CH 7352022
(71) Anmelder: Maschinenfabrik Rieter AG, 8406 Winterthur (CH)
(72) Erfinder: SCHMID, Alexander, 8400 Winterthur (CH); AERNE, Adrian, 8360 Wallenwil (CH)

(57) **Zusammenfassung**

Die Erfindung bezieht sich auf eine Vorrichtung zur Kalandrierung einer Wattebahn (1) mit zwei Seitenschildern (19) und mit einem zwischen den Seitenschildern angeordneten Kalanderwalzenpaar bestehend aus einer ersten Kalanderwalze (3) und einer zweiten Kalanderwalze (7), wobei die erste Kalanderwalze in den Seitenschildern ortsfest und drehbar gehalten ist. Die zweite Kalanderwalze (7) ist drehbar und exzentrisch an ihren Enden in jeweils einem Lagergehäuse (11) gehalten, wobei die Lagergehäuse (11) eine Lagergehäuseachse (12) aufweisen und in den Seitenschildern (19) um die Lagergehäuseachse drehbar und ortsfest gehalten sind. Eine Drehung zumindest eines Lagergehäuses (11) mit einem Aktor (14) ist zur Bildung einer Klemmlinie (18) zwischen der zweiten Kalanderwalze (7) und der ersten Kalanderwalze (3) vorgesehen.

## Beschreibung

Die Erfindung bezieht sich auf eine Spinnereivorbereitungsmaschine zur Herstellung eines Wattewickels und eine Vorrichtung zur Kalandrierung einer Wattebahn mit einem Kalanderwalzenpaar bestehend aus einer ersten Kalanderwalze mit einer ersten Kalanderachse und einer zweiten Kalanderwalze mit einer zweiten Kalanderachse, wobei die erste Kalanderwalze in einem Maschinengestell ortsfest und drehbar gehalten ist.

Derartige Kalanderwalzenpaare sind im Stand der Technik in verschiedenen Ausführungen bekannt. Sie dienen dazu Fasermaterial zu verdichten (kalandrieren), um diese an eine nachfolgende Behandlung weiterzugeben. Im Besonderen werden Kalanderwalzenpaare in Spinnereivorbereitungsmaschinen zur Herstellung von Wattewickeln eingesetzt, um aus einer endlosen Wattebahn einen möglichst kompakten Wattewickel zu bilden. Zur Bildung der Wattewickel werden heute mehrheitlich zwei unterschiedliche Wickler verwendet. Zum einen kommen sogenannte Walzenwickler zum Einsatz, in welchen die Wattewickel auf Wickelwalzen gebildet werden. In der zweiten Ausführung wird in sogenannten Riemenwicklern der Wattewickel in einem umlaufenden Riemen gebildet. Bei Riemenwicklern wie auch bei Walzenwicklern sind dem eigentlichen Wickelvorgang eines oder mehrere Kalanderwalzenpaare vorgeschaltet. Durch die Kalandrierung werden die Wattebahnen vor einem Einlauf in die Wickelvorrichtung gepresst und verdichtet.

Eine gattungsgemässe Vorrichtung zur Kalandrierung ist beispielsweise in der CH 699 284 A2 offenbart, dabei weist die Vorrichtung ein Kalanderwalzenpaar auf, bei welchem eine der beiden Kalanderwalzen radial verschieblich im Maschinenrahmen gehalten ist. Über einen mit Druckluft beaufschlagbaren Balgzylinder, welcher sich einerseits am Maschinengestell und andererseits an einem die Lagerstelle der beweglich gelagerten Kalanderwalze aufnehmenden Element abstützt, wird die bewegbare Kalanderwalze an die ortsfest gehaltene andere Kalanderwalze gepresst. Weiter ist der EP 0360 142 B1 eine Ausführung einer Vorrichtung zur Kalandrierung zu entnehmen, wobei die Kalanderwalzen über eine Druckfeder gegeneinandergepresst werden, um die zwischen den Umfangsflächen der Kalanderwalzen hindurch geführte Wattebahn zu verdichten. Um eine entsprechend hohe und notwendige Druckkraft zu erzielen, werden hier relativ starke und massive Druckfedern verwendet.

Nachteilig an den bekannten Ausführungen ist, dass eine radial bewegliche oder verschiebliche Lagerung zumindest einer Kalanderwalze vorzusehen ist, was zu einer aufwändigen Konstruktion der Vorrichtung zur Kalandrierung führt, um einem hohen Verschleiss sowie entstehenden Vibrationen entgegenzuwirken.

Es ist deshalb die Aufgabe der Erfindung eine Vorrichtung zur Kalandrierung vorzuschlagen, die eine einfache Konstruktion erlaubt und eine hohe Druckkraft zwischen den Kalanderwalzen ermöglicht.

Diese Aufgabe wird gelöst, indem eine Vorrichtung zur Kalandrierung einer Wattebahn mit zwei Seitenschildern und mit einem zwischen den Seitenschildern angeordneten Kalanderwalzenpaar bestehend aus einer ersten Kalanderwalze und einer zweiten Kalanderwalze vorgeschlagen wird, wobei die erste Kalanderwalze in den Seitenschildern ortsfest und drehbar gehalten ist und die zweite Kalanderwalze drehbar und exzentrisch in jeweils einem Lagergehäuse gehalten ist. Die Lagergehäuse weisen eine Lagergehäuseachse auf und sind in den Seitenschildern um die Lagergehäuseachse drehbar gehalten, wobei eine Drehung zumindest eines Lagergehäuses mit einem Aktor zur Bildung einer Klemmlinie zwischen der zweiten Kalanderwalze und der ersten Kalanderwalze vorgesehen ist. Die erste Kalanderwalze ist direkt in den Seitenschildern gelagert. Die zweite Kalanderwalze hingegen ist in jeweils einem Lagergehäuse gelagert, wobei diese Lagergehäuse in den Seitenschildern gelagert sind. Die Kalanderwalze ist exzentrisch im Lagergehäuse gehalten, dadurch ergeben sich für eine Drehung des Lagergehäuses im Seitenschild und eine Drehung der Kalanderwalze selbst unterschiedliche Bezugsachsen. Dies führt in der Folge dazu, dass bei einer Drehung der Lagergehäuse um die Lagergehäuseachse eine Verschiebung der zweiten Kalanderwalze in Bezug auf eine fixe Position der ersten Kalanderwalze erreicht wird. Da jedoch die erste Kalanderwalze nicht ausweicht wird die zweite Kalanderwalze entsprechend an die erste Kalanderwalze gepresst, was zur Entstehung einer Klemmlinie führt. In dieser Klemmlinie wird eine zwischen den Kalanderwalzen durchlaufende Wattebahn kalandriert (gepresst).

Die Anordnung der Lagerung der zweiten Kalanderwalze in Lagergehäusen und eine Drehung der Lagergehäuse hat den Vorteil, dass keine lineare Verschiebung der Lagerung der zweiten Kalanderwalze erfolgen muss und eine stabile und langlebige Lagerung der zweiten Kalanderwalze ermöglicht wird. Die Lagerung der Lagergehäuse in den Seitenschildern kann als einfache Gleitlagerung oder als Lagerung mit Wälzlagern ausgeführt werden. Die Lagerung der zweiten Kalanderwalze innerhalb der Lagergehäuse ist, wie auch die Lagerung der ersten Kalanderwalze in den Seitenschildern, mit Wälzlagern vorzusehen aufgrund der durch den Betrieb bestehenden Belastung.

Der Aktor kann als drehender Antrieb, welcher direkt die Lagergehäuse bewegt oder als Linearantrieb, welcher über einen ausserhalb der Lagergehäuseachse angeordneten Anlenkpunkt die Lagergehäuse in Drehung versetzt. Ein Linearantrieb ist beispielsweise als elektromotorischer, pneumatischer oder hydraulischer Antrieb ausgeführt. Auch ein mechanisch funktionierender Aktor ohne Antrieb, wie beispielsweise eine Blatt- oder Spiralfeder können verwendet werden. In einer bevorzugten Ausführung des Aktors kann mit dessen Hilfe das Kalanderwalzenpaar derart weit geöffnet werden, dass ein konfliktfreier Einfädelprozess bei einem Wechsel der Wattebahn möglich ist. Bei Verwendung einer Feder ist vorteilhafterweise eine manuelle oder motorische Bewegung der zweiten Kalanderwalze vorzusehen, um eine Einfädelung einer neuen Watte in einem entspannten Kalanderwalzenpaar zu ermöglichen.

Die vorgeschlagene Bauweise worin eine Bewegung der zweiten Kalanderwalze gegen die erste Kalanderwalze über das Lagergehäuse realisiert wird, ermöglicht eine baugleiche Ausführung der beiden Kalanderwalzen. Dabei sind die Walzenkörper, die Wellen und die Lagerungen der beiden Kalanderwalzen zumindest in ihren Dimensionen baugleich und aus Stahl ausgeführt. Es kann von Vorteil sein, wenn die Kalanderwalzen mit einer harten Beschichtung, beispielsweise mit Chrom- oder Nickelanteilen, versehen wird. Eine derartige Beschichtung mindert den Verschleiss der Kalanderwalzen sowie Faseranhaftungen.

Vorteilhafterweise ist für beide Lagergehäuse der zweiten Kalanderwalze jeweils ein Aktor vorgesehen ist. Werden beide Lagergehäuse gleichzeitig um ihre Lagergehäuseachsen gedreht, respektive versucht zu drehen, ergibt sich eine symmetrische Beaufschlagung der zweiten Kalanderwalze mit einer Aktorkraft und daraus auch eine gleichmässigere Auswirkung auf die Klemmlinie. Auch kann die für die Kalandrierung notwendige Klemmkraft auf zwei Aktoren aufgeteilt werden, was zu einer wesentlichen Verkleinerung der Vorrichtung führt.

Weiter ist es von Vorteil, wenn eine, über einen ausserhalb der Lagergehäuseachse angeordneten Anlenkpunkt, auf das Lagergehäuse aufgebrachte Aktorkraft zur Erzeugung einer Klemmkraft von mehr als 8 kN zwischen der ersten Kalanderwalze und der zweiten Kalanderwalze vorgesehen ist. Abhängig von den Eigenschaften der Wattebahn vor dem Kalanderwalzenpaar und den Anforderungen an die gepresste Wattebahn nach dem Durchlaufen der Klemmlinie ist eine Klemmkraft bis zu 30 kN von Vorteil.

Vorteilhafterweise ist die erste Kalanderwalze mit einem elektrischen Antrieb versehen. Die zweite Kalanderwalze wird mittels eines Riemen- oder Kettentriebs von der ersten Kalanderwalze oder durch den über die Klemmlinie bestehenden Kontakt mit der ersten Kalanderwalze über die Reibung angetrieben. Da eine hohe Druckkraft zwischen den Kalanderwalzen erreicht wird ist ein Antrieb der zweiten Kalanderwalze über den Reibeffekt möglich. Alternativ ist anstelle der ersten Kalanderwalze die zweite Kalanderwalze mit einem elektrischen Antrieb versehen.

Bevorzugterweise sind die erste Kalanderwalze und die zweite Kalanderwalze jeweils mit einem elektrischen Antrieb versehen. Dadurch dass beide Kalanderwalzen mit eigenen Antrieben versehen sind, ist neben einer Vermeidung von unterschiedlichen Drehzahlen der beiden Kalanderwalzen auch die Möglichkeit gegeben, dass bei einem Einfädelprozess nur eine der Kalanderwalzen in Bewegung versetzt wird.

Bevorzugterweise weist das Lagergehäuse eine Exzentrizität von 2 mm bis 15 mm auf. Dies bedeutet, dass zwischen der Lagergehäuseachse und einer Längsachse der Welle der zweiten Kalanderwalze ein Abstand von 2 mm bis 15 mm vorgesehen ist. Es hat sich gezeigt, dass bei einer grösseren Exzentrizität sich eine unverhältnismässige notwendige konstruktive Grösse des Lagergehäuses ergibt. Bei einer zu geringen Exzentrizität des Lagergehäuses ergibt sich, dass ein nur noch geringes Auseinanderfahren der beiden Kalanderwalzen möglich ist, was bei Reinigung der Kalanderwalzen oder bei Einfädelung einer neuen Wattebahn zu Schwierigkeiten führen kann. Besonders bevorzugt ist eine Exzentrizität von 4 mm bis 8 mm vorzusehen.

Vorteilhafterweise weist ein Anlenkpunkt des Aktors am Lagergehäuse von der Lagergehäuseachse einen Abstand von wenigstens 50 mm auf. Umso grösser der Abstand des Anlenkpunktes von der Lagergehäuseachse gewählt wird, desto grösser ist eine Übersetzung der Aktorkraft in die Klemmkraft. Die Aktorkraft ist die Kraft, mit welcher der Aktor gegen den Anlenkpunkt am Lagergehäuse drückt und die Klemmkraft ist die in der Klemmlinie resultierende Kraft, mit welcher die Wattebahn gepresst wird. Eine Vergrösserung des Abstandes über 50 mm zwischen dem Anlenkpunkt und der Lagergehäuseachse ist beliebig möglich, da der Anlenkpunkt über einen am Lagergehäuse angebrachten Hebel auch über einen äusseren Durchmesser des Lagergehäuses hinaus an diesem festgemacht werden kann. Ein derartiger Hebel kann einstückig mit dem Lagergehäuse ausgebildet sein, beispielsweise durch eine Erweiterung des Lagergehäuses an der Stelle des Anlenkpunktes. Durch den Abstand des Anlenkpunktes von der Lagergehäuseachse und der Exzentrizität der Achse der zweiten Kalanderwalze ergibt sich die Übersetzung der Aktorkraft zur Klemmkraft. Damit kann durch eine Vergrösserung des Abstandes des Anlenkpunktes bei gleichbleibender Aktorkraft eine Erhöhung der Klemmkraft erreicht werden.

Bevorzugterweise beträgt eine Übersetzung des Kraftverhältnisses von Aktorkraft zu Klemmkraft mindestens 1 zu 3. Mit einem Kraftverhältnis zwischen 20 zu 1 und 5 zu 1 ergibt sich eine günstige und platzsparende Konstruktion hinsichtlich den Verhältnissen von einem Lagergehäusedurchmesser zu einer Exzentrizität und einem Abstand des Anlenkpunktes sowie einer Baugrösse des Aktors.

Weiter wird eine Spinnereivorbereitungsmaschine zur Herstellung eines Wattewickels aus einer Wattebahn mit einem umlaufenden endlosen Riemen oder zumindest einer rotierenden Wickelwalze vorgeschlagen, wobei zur Verdichtung der Wattebahn zumindest ein Kalanderwalzenpaar nach der vorherigen Beschreibung vorgesehen ist. Spinnereivorbereitungsmaschine zur Herstellung von Wattewickeln werden in verschiedenen Ausführungen eingesetzt. Aufgrund der beschriebenen vorteilhaften Ausführung eines Kalanderwalzenpaares kann dies in allen Bauarten von Spinnereivorbereitungsmaschinen verwendet werden. Dabei spielt der Einbauort oder die Anzahl der Kalanderwalzenpaare keine Rolle. Kalanderwalzenpaare der beschriebenen Bauart können auch ausserhalb von Spinnereivorbereitungsmaschinen eingesetzt werden in Vorrichtungen und Maschinen, in welchen eine Verpressung von Fasermatten oder Faservliesen notwendig ist.

Weitere Vorteile der Erfindung werden in nachfolgenden Ausführungsbeispielen näher aufgezeigt und beschrieben. Es zeigen
- Figur 1: eine schematische Darstellung einer Ausführungsform der Vorrichtung zur Kalandrierung einer Wattebahn nach der Erfindung;
- Figur 2: eine schematische Darstellung eines Querschnitts an der Stelle A-A nach Figur 1 ;
- Figur 3: eine schematische Darstellung eines Riemenwicklers zur Herstellung eines Wattewickels nach der Erfindung und
- Figur 4: eine schematische Darstellung eines Walzenwicklers zur Herstellung eines Wattewickels nach der Erfindung.

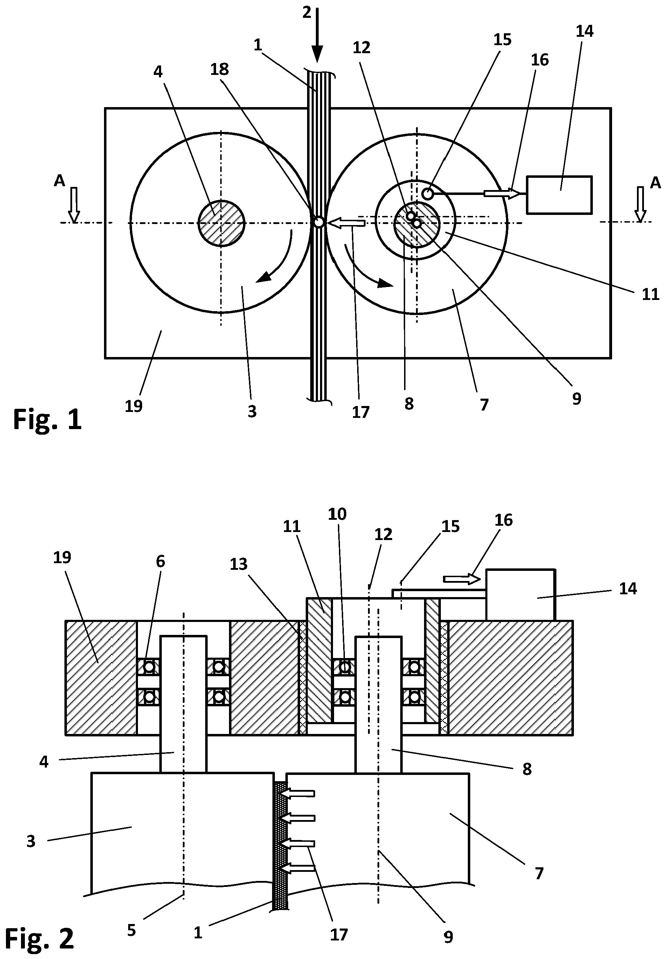

Figur 1 zeigt eine schematische Darstellung einer Ausführungsform der Vorrichtung zur Kalandrierung einer Wattebahn 1 nach der Erfindung in einer Ansicht und Figur 2 in einem Querschnitt an der Stelle A-A nach Figur 1. Eine erste Kalanderwalze 3 weist eine Achse 5 auf und ist mit ihrer Welle 4 in ein einem Seitenschild 19 über eine Lagerung 6 drehbar und ortsfest gehalten. Der ersten Kalanderwalze 3 gegenüberstehend ist eine zweite Kalanderwalze 7 mit einer Achse 9 im gleichen Seitenschild 19 gehalten. Die zweite Kalanderwalze 7 ist mit ihrer Welle 8 über eine Lagerung 10 nicht direkt im Seitenschild 19, sondern in einem Lagergehäuse 11 drehbar und in Bezug auf das Lagergehäuse 11 ortsfest gehalten. Die Lagerung 10 der Welle 8 der zweiten Kalanderwalze 7 ist im Lagergehäuse 11 exzentrisch vorgesehen. Die Achse 9 der Welle 8 der zweiten Kalanderwalze 7 ist aufgrund der Exzentrizität nicht deckungsgleich mit einer Lagergehäuseachse 12 des Lagergehäuses 32. Das Lagergehäuse 11 ist im Seitenschild 19 mit einer von der Lagerung 10 der zweiten Kalanderwalze 7 unabhängigen Lagerung 13 drehbar und ortsfest gehalten. Die Lagerungen 6 und 10 der Wellen 4 und 8 der ersten und zweiten Kalanderwalze 3 und 7 sind beispielhaft als Wälzlagerungen dargestellt. Die Lagerung 13 des Lagergehäuses 11 ist beispielshaft als Gleitlager dargestellt. Es sind jedoch auch andere Anordnungen und Ausführungen der Lagerungen 6, 10 und 13 möglich, welche den Anforderungen gerecht werden, die gewählten Darstellungen der Lagerungen 6, 10 und 13 sind als schematisch und nicht einschränkend zu verstehen.

Am Lagergehäuse 11 ist in einem Anlenkpunkt 15 ein am Seitenschild 19 befestigter Aktor 14 angesetzt. Durch den Aktor 14 wird über den Anlenkpunkt 15 das Lagergehäuse 11 in Drehung versetzt, dabei ist der Anschluss des Aktors 14 im Anlenkpunkt 15 beweglich ausgeführt und in einem Abstand von der Lagergehäuseachse 12 angeordnet, sodass sich durch eine lineare Bewegung des Anlenkpunktes 15 eine Drehbewegung des Lagergehäuses 11 um die Lagergehäuseachse 12 ergibt. Aufgrund der exzentrischen Lagerung der zweiten Kalanderwalze 7 im Lagergehäuse 11 wird bei einer Drehung des Lagergehäuses 11 die zweite Kalanderwalze 7 gegen die erste Kalanderwalze 3 verschoben und zwischen den Kalanderwalzen 3 und 7 eine Klemmlinie 18 gebildet. Durch eine gegenseitige Rotation (durch Pfeile in Figur 1 gezeigt) der Kalanderwalzen 3 und 7 wird eine in die Klemmlinie 18 eingeführte Wattebahn 1 in einer Laufrichtung 2 gefördert. Durch den Aktor 14 wird eine Aktorkraft 16 auf den Anlenkpunkt 15 und damit auf das Lagergehäuse 11 ausgeübt. Vom Lagergehäuse 11 wird die Aktorkraft 16 auf die im Lagergehäuse 11 gehaltene zweite Kalanderwalze 7 übertragen. Die zweite Kalanderwalze 7 wird in der Folge mit einer der Aktorkraft 16 entsprechenden Klemmkraft 17 gegen die erste Kalanderwalze 3 gepresst. Dadurch wird die sich zwischen der ersten und zweiten Kalanderwalze 3 und 7 in der Klemmlinie 18 befindliche Wattebahn 1 zusammengepresst.

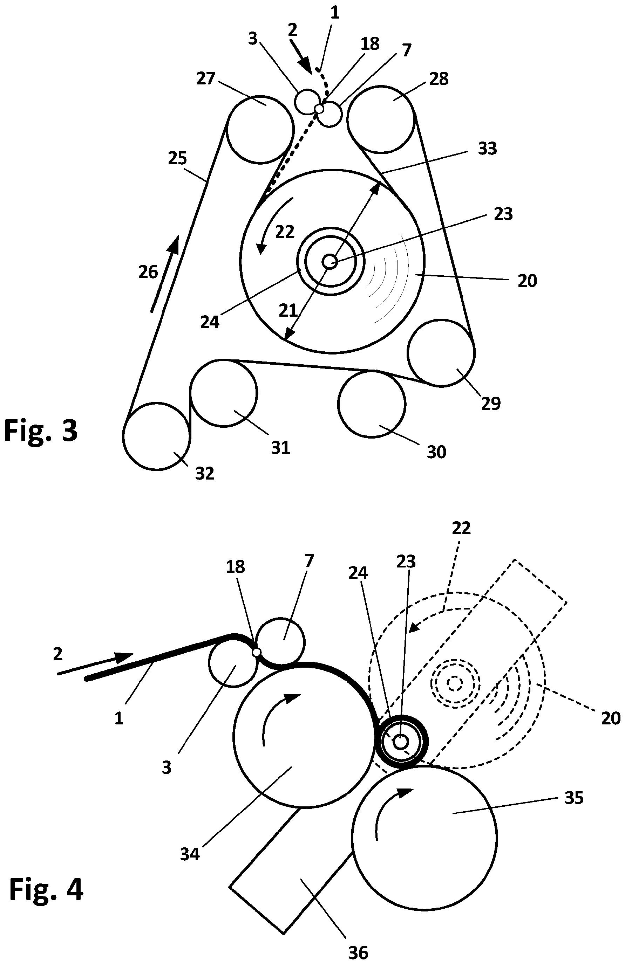

Figur 3 zeigt eine schematische Darstellung eines Riemenwicklers zur Herstellung eines Wattewickels 20 nach der Erfindung. Dem Riemenwickler wird eine Wattebahn 1 in Laufrichtung 2 über ein aus einer ersten Kalanderwalze 3 und einer zweiten Kalanderwalze 7 bestehendes Kalanderwalzenpaar zugeführt. Die Wattebahn 1 durchläuft eine durch die erste Kalanderwalze 3 und die zweite Kalanderwalze 7 gebildete Klemmlinie 18. Zur Ausführung des Kalanderwalzenpaares wird auf die Beschreibung der Figuren 1 und 2 verwiesen. Nach dem Kalanderwalzenpaar wird die Wattebahn 1 zur Wicklung auf einen Kern 24 weitergeleitet. Die Wattebahn 1 wird anschliessend auf den Kern 24 aufgewickelt, der um eine ortsfeste Wickelachse 23 drehbar gelagert ist. Als Kern 24 werden Hülsen aus Kunststoff oder Metall verwendet. Der Kern 24 wird von einem umlaufenden, endlosen Riemen 25 angetrieben, durch den zwischen einer ersten Umlenkrollen 27 und einer zweiten Umlenkrolle 28 eine Schlaufe 33 gebildet wird, in welcher der Kern 24 aufgenommen ist. Im vorliegenden Fall wird der Wattewickel 1 durch den Riemen 25 mit einer Laufrichtung 26 entgegen dem Uhrzeigersinn in einer Drehrichtung 22 angetrieben. Der Riemen 25 wird in seiner Laufrichtung 26 nach der zweiten Umlenkrolle 28 über eine Ausgleichsrolle 29, eine erste Führungsrolle 30, eine zweite Führungsrolle 31 und eine Spannrolle 32 zurück zur ersten Umlenkrolle 27 geführt. Die Anordnung und Funktionszuordnung zur Ausgleichsrolle 29, erster und zweiter Führungsrolle 30 und 31 und zur Spannrolle 32 ist in der gezeigten Darstellung beispielhaft. Die den Wattewickel 20 umschlingende Schlaufe 33 des Riemens 25 wird mit einem zunehmenden Durchmesser 21 des Wattewickels 20 grösser, wobei der Riemen 25 während des gesamten Wickelvorgangs durch die Spannrolle 32 gespannt bleibt. Über die Spannrolle 32 wird die sich, mit zunehmendem Durchmesser 21 des Wattewickels 20, ändernde Grösse der Schlaufe 33 kompensiert. Die Spannrolle 32 ist zur Ausführung dieser Ausgleichsbewegung über einen Schwenkhebel oder eine Linearführung (nicht gezeigt) auslenkbar.

Figur 4 zeigt eine schematische Darstellung eines Walzenwicklers zur Herstellung eines Wattewickels 20 nach der Erfindung. Dem Walzenwickler wird eine Wattebahn 1 in Laufrichtung 2 zugeführt. Die Wattebahn 1 wird von einem aus einer ersten Kalanderwalze 3 und einer zweiten Kalanderwalze 7 bestehendes Kalanderwalzenpaar übernommen. Die Wattebahn 1 durchläuft eine durch eine erste Kalanderwalze 3 und eine zweite Kalanderwalze 7 gebildete Klemmlinie 18. Zur Ausführung des Kalanderwalzenpaares wird auf die Beschreibung der Figuren 1 und 2 verwiesen. Nach dem Kalanderwalzenpaar wird die Wattebahn 1 an eine erste Wickelwalze 34 übergeben. Von der ersten Wickelwalze 34 gelangt die Wattebahn 1 auf einen Kern 24 und wird auf diesen aufgewickelt. Der Wickelprozess wird durch die zweite Wickelwalze 35 unterstützt, Dabei rotieren die beiden Wickelwalzen 34 und 35 gleichläufig und treiben den Kern 24 respektive den entstehenden Wattewickel 20 an. Der Kern 24 rotiert um eine Wickelachse 23. Der Kern 24 ist mit der Wickelachse 23 in einer Führung 36 gehalten, dabei ist die Lagerung der Wickelachse 23 in der Führung 36 verschieblich angeordnet, sodass der Kern 24 mit dem grösser werdenden Wattewickel 20 sich immer weiter von den Wickelwalzen 34 und 35 entfernt. In Figur 4 ist ein fertiger Wattewickel 20 mit seiner Drehrichtung 22 in einer Endstellung in Bezug auf die Führung 36 gestrichelt dargestellt.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Wattebahn
- 2: Laufrichtung Wattebahn
- 3: Erste Kalanderwalze
- 4: Welle erste Kalanderwalze
- 5: Achse erste Kalanderwalze
- 6: Lagerung erste Kalanderwalze
- 7: Zweite Kalanderwalze
- 8: Welle zweite Kalanderwalze
- 9: Achse zweite Kalanderwalze
- 10: Lagerung zweite Kalanderwalze
- 11: Lagergehäuse
- 12: Lagergehäuseachse
- 13: Lagerung des Lagergehäuses
- 14: Aktor
- 15: Anlenkpunkt
- 16: Aktorkraft
- 17: Klemmkraft
- 18: Klemmlinie
- 19: Seitenschild
- 20: Wattewickel
- 21: Wattewickeldurchmesser
- 22: Drehrichtung Wattewickel
- 23: Wickelachse
- 24: Kern
- 25: Riemen
- 26: Laufrichtung Riemen
- 27: Erste Umlenkrolle
- 28: Zweite Umlenkrolle
- 29: Ausgleichsrolle
- 30: Erste Führungsrolle
- 31: Zweite Führungsrolle
- 32: Spannrolle
- 33: Schlaufe
- 34: Erste Wickelwalze
- 35: Zweite Wickelwalze
- 36: Führung

## Patentansprüche

1. Vorrichtung zur Kalandrierung einer Wattebahn (1) mit zwei Seitenschildern (19) und mit einem zwischen den Seitenschildern (19) angeordneten Kalanderwalzenpaar bestehend aus einer ersten Kalanderwalze (3) und einer zweiten Kalanderwalze (7), wobei die erste Kalanderwalze (3) in den Seitenschildern (19) ortsfest und drehbar gehalten ist, **dadurch gekennzeichnet, dass** die zweite Kalanderwalze (7) drehbar und exzentrisch in jeweils einem Lagergehäuse (11) gehalten ist, wobei die Lagergehäuse (11) eine Lagergehäuseachse (12) aufweisen und in den Seitenschildern (19) um die Lagergehäuseachse (12) drehbar und ortsfest gehalten sind und dass eine Drehung zumindest eines Lagergehäuses (11) mit einem Aktor (14) zur Bildung einer Klemmlinie (18) zwischen der zweiten Kalanderwalze (7) und der ersten Kalanderwalze (3) vorgesehen ist.

2. Vorrichtung nach Anspruch 1, **dadurch gekennzeichnet, dass** für beide Lagergehäuse (11) der zweiten Kalanderwalze (7) jeweils ein Aktor (14) vorgesehen ist.

3. Vorrichtung nach Anspruch 1 oder 2, **dadurch gekennzeichnet, dass** eine, durch den Aktor (14) über einen ausserhalb der Lagergehäuseachse (12) angeordneten Anlenkpunkt (15) auf das Lagergehäuse (12) aufgebrachte Aktorkraft (16) zur Erzeugung einer Klemmkraft (17) von mehr als 8 kN zwischen der ersten Kalanderwalze (3) und der zweiten Kalanderwalze (7) vorgesehen ist.

4. Vorrichtung nach zumindest einem der vorangehenden Ansprüche, **dadurch gekennzeichnet, dass** die erste Kalanderwalze (3) mit einem elektrischen Antrieb versehen ist.

5. Vorrichtung nach zumindest einem der vorangehenden Ansprüche, **dadurch gekennzeichnet, dass** die zweite Kalanderwalze (7) mit einem elektrischen Antrieb versehen ist.

6. Vorrichtung nach zumindest einem der vorangehenden Ansprüche, **dadurch gekennzeichnet, dass** die erste Kalanderwalze (3) und die zweite Kalanderwalze (7) jeweils mit einem elektrischen Antrieb versehen sind.

7. Vorrichtung nach zumindest einem der vorangehenden Ansprüche, **dadurch gekennzeichnet, dass** das Lagergehäuse (11) eine Exzentrizität von 2 mm bis 15 mm aufweist.

8. Vorrichtung nach zumindest einem der vorangehenden Ansprüche, **dadurch gekennzeichnet, dass** ein Anlenkpunkt (15) des Aktors (14) am Lagergehäuse (11) von der Lagergehäuseachse (12) einen Abstand von wenigstens 50 mm aufweist.

9. Vorrichtung nach zumindest einem der Ansprüche 3 bis 8, **dadurch gekennzeichnet, dass** eine Übersetzung des Kraftverhältnisses von Aktorkraft (16) zu Klemmkraft (17) mindestens 1 zu 3 beträgt.

10. Spinnereivorbereitungsmaschine zur Herstellung eines Wattewickels (20) aus einer Wattebahn (1) mit einem umlaufenden endlosen Riemen (25) oder zumindest einer rotierenden Wickelwalze (34, 35), **dadurch gekennzeichnet, dass** zur Verdichtung der Wattebahn (1) zumindest ein Kalanderwalzenpaar (3, 7) nach einem der vorangehenden Ansprüche vorgesehen ist.
